# EUROPEAN PATENT APPLICATION

(11) **EP 2 006 774 A1**
(43) Date of publication of application: **24.12.2008**
(21) Application number: 07710874.4
(22) Date of filing: 07.02.2007
(51) Int. Cl.: G06F 12/02, G11B 20/12, G11B 27/00, G06F 3/06, G06F 13/00, G06K 19/07, G11C 7/00

(54) **SMART CARD STORAGE SYSTEM AND FILE MANAGEMENT METHOD THEREIN**

(30) Priority: 23.03.2006 CN 200610065158
(71) Applicant: Beijing Watch Data System Co., Ltd., Beijing 100015 (CN)
(72) Inventor: YE, Xin, Chaoyang District Beijing 100-015 (CN); LONG, Defan, Chaoyang District Beijing 100-015 (CN)
(74) Representative: HOFFMANN EITLE
(86) International application number: PCT/CN2007/000427
(87) International publication number: WO 2007/107073

(57) **Abstract**

A smart card storage system, which comprises a storage region and a control unit, and a file management method therein. The storage region includes a FAT (File Allocation Table) storage region and a data region for storing files; the FAT storage region contains FAT entries; the data region contains blocks; each FAT entry corresponds to one of the data blocks. The control unit finds FAT entries in the FAT storage region, and has operation on files in the data region, e.g. create, store, update, read, delete and resize(truncate/append),according to the correspondence between FAT entries and data blocks.

## Description

### BACKGROUND OF THE INVENTION

### 1. Technical Field

This invention relates to embedding technologies, and more particularly, to a smart card storage system and file management method therein in the field of smart cards and USB TOKEN.

### 2. Description of Related Art

With increasingly widespread use of smart cards, functional requirements on smart cards are becoming more and more diversified, which drives the smart cards to be developed ever faster in respect of hardware configuration. For example, CPUs are evolving from the original 8-bit ones through the 16-bit ones that are in extensive use now towards the 32-bit ones that are becoming increasingly popular; memories are evolving from the original ROMs, RAMs and EEPROM through NOR FLASH memories towards those combining the NOR FLASH and NAND FLASH together; transmission interfaces are evolving from ISO7816 single-interfaces towards MMC, USB and similar multi-channel fast interfaces; and particularly, the storage capacity are increasing by orders of magnitude from the original byte level through the K-byte level at present towards the mega-byte and even giga-byte level.

All applications and data are stored in form of files in the smart cards. File types in the smart cards completely comply with definitions made in the ISO7816 specifications, i.e., are classified into directory files and elementary files. The elementary files are further classified into a plurality of types including binary files, fixed-length record files, variable-length record files and circular files. External access to data in a smart card is to the end the access to content of a particular file in the memory of the smart card. A conventional smart card generally has a chip of small capacity, so it can only accomplish very limited functions. In this case, management of the file system in the smart card is relatively simple; in more detail, such a smart card typically adopts a sequential file space allocation method which does not support flexible creation, deletion and space recycling of files.

Taking a popular mobile phone SIM card as an example, for a card supporting 100 short messages and 50 telephone numbers, if a user is not interested in short message services but wants more space for telephone numbers, the conventional mobile phone SIM card fails to support complementary use of the short message space and the telephone number space; in other words, it fails to supplement the remaining short message space to the telephone number space that is in shortage because the conventional smart card employs the sequential space allocation method.

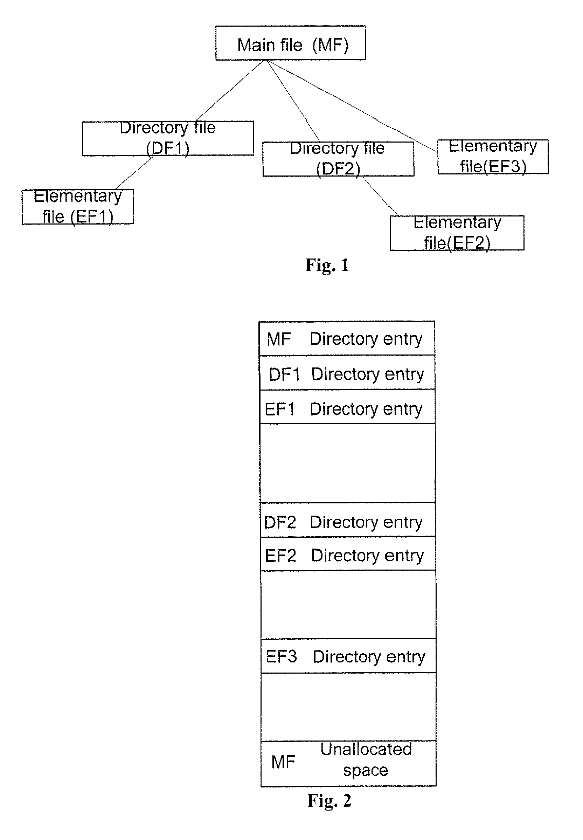

Fig. 1 shows a file structure in an exemplary smart card. Fig. 2 shows a memory allocation method for the file structure in the conventional smart card.

Each file consists of a file directory entry and a file body space, in which the file directory entry records basic information of the file, e.g., the file name, file size and so on. It can be seen from Fig. 2 that, the conventional smart card manages files with the sequential space allocation method: a main file is allocated the maximum space in the card automatically when it is created, while other files are sequentially allocated space according to the time when they are created and the size thereof. For example, when a sub-file is to be created under the current directory file, it is checked whether the remaining space in the current directory is larger than size of the sub-file to be created. If it is, the sub-file will be created in sequence from a starting address of the remaining space; otherwise, if the remaining space is not large enough, the sub-file will fail to be created.

This method of allocating file space in sequence has the following disadvantages:
(1) The system allocates space to a file according to the size designated when it is created; since the address space is allocated in sequence, a file will have a fixed location once it is allocated space successfully.
(2) The file size, which is pre-assigned when the file is created, cannot be altered once the file is created, so the file size remains constant during the use thereof. This may cause cases where the space of the file is undersized or is wasted;
(3) It fails to provide an effective mechanism that allows spaces of the two files to complement each other when it is found that one of the files is allocated an undersized space while the other is allocated an oversized space.
(4) Although the file allows to be deleted, the space of the deleted file cannot be recycled in the system because each newly created file is allocated a space starting from the already allocated address spaces. This causes significant waste of the storage space in the card.

As applications of smart cards become increasingly diversified and the storage capacity thereof increases continuously, such a conventional file management method gradually becomes unable to satisfy the need in practical applications.

### BRIEF SUMMARY OF THE INVENTION

This invention provides a smart card storage system and file management method therein, and also relates to storage, reading, updating and deletion of files created as well as alteration of spaces occupied by the files. By combining a file allocation table (FAT) with a conventional smart card system and by employing a new method of managing file creation, this storage system overcomes the problem that the prior art does not support flexible creation, deletion and space recycling of files.

The objective of this invention is accomplished in the following way:

This invention provides a smart card storage system , which comprises a storage area and a control unit. The storage area comprises an FAT storage area and a data storage area for storing file content, in which the FAT storage area comprises a plurality of FAT entries and the data storage area comprises a plurality of data blocks, each corresponding to an FAT entry. The control unit is configured to search in the FAT storage area for an FAT entry and control a file in a data block according to a correspondence relationship between the FAT entry and the data block.

The data storage area comprises a file directory entry storage unit for storing a file directory entry and a file body space storage unit for storing a file body space, in which the file directory entry storage unit and the file body space storage unit are located in different data blocks.

The content recorded in the FAT entry represents a number of a next data block occupied by the current file. If the current file does not have the next data block, the value in the FAT entry is a particular value representing an end; and if the data block is unoccupied, the value in the FAT entry is a particular value representing the unoccupied status.

This invention provides a method of managing file creation in a smart card storage system , in which creating a new file comprises the steps of:
A. The control unit searches in the FAT storage area for an unoccupied FAT entry, and finds an unoccupied data block according to a correspondence relationship between the FAT entry and the data block;
B. The control unit allocates the unoccupied data block found to a file directory entry of the file to be created, writes the file information, and alters a value of the FAT entry corresponding to the data block into a particular value representing an occupied status;
C. Repeating Step A to search for unoccupied data blocks, allocating the unoccupied data blocks found this time to a file body space of the file to be created, altering FAT entries corresponding to the data blocks into particular values that represent an occupied status so as to from an FAT entry linked list, recording a number of the first data block into the file directory entry determined in Step B, and altering an FAT entry corresponding to the last data block occupied by the file into a value representing an end.

The file information written in Step B includes at least the file size and a start data block number.

Prior to Step A, the control unit also determines a remaining space under the current directory, and Step A may be executed only if the remaining space under the current directory is no smaller than the space necessary for creation of the file.

If the file to be created is a directory file, then in Step C, the start data block number of the file in the file directory entry records a number of a data block occupied by a file directory entry of the first sub-file to be created under the directory file, and the FAT entry corresponding to the data block occupied by the file directory entry of the first sub-file records a number of a data block occupied by a file directory entry of the next sub-file to be created under the directory file, and so on. Thus, all data blocks are linked together to form the FAT entry linked list of the file body space of the directory file.

If the file to be created is an elementary file, then in Step C, the start data block number of the file in the file directory entry records a number of the first data block occupied by a file body space of the elementary file, and the FAT entry corresponding to the start data block records a number of the second data block occupied by the file body space of the elementary file.

Prior to Step C, the control unit also counts the number of the data blocks in the file body space of the elementary file, and in Step C, the control unit needs to find a corresponding number of unoccupied FAT entries from the FAT and link them together before allocating these data blocks to the file body space of the elementary file.

Storing content of the file comprises the steps of:
D: The control unit obtains the number of the start data block that stores data in the file body space according to the directory entry of the created file;
E: The control unit obtains a corresponding FAT entry according to the start data block number of the file and further obtains the FAT entry linked list of the data blocks to be occupied by the file to be stored. Then the control unit begins to store the file content according to the FAT entry linked list until the file content is completely stored.

Updating the created or stored file comprises the steps of:
F: The control unit searches for a matching file directory entry according to an identifier or a file name of the file to be updated, and from the file directory entry, obtains a number of the start data block that stores data in the file body space;
G: The control unit obtains an FAT entry corresponding to the start data block according to the start data block number and further obtains an FAT entry linked list of data blocks occupied by the file to be updated, and then searches in the linked list for a new start data block number according to the start data block number obtained in Step F and an offset of an updated start address from the start address of the file body space, so as to update the data blocks until a designated length of the file content has been updated.

Reading the created or stored file comprises the steps of:
H: The control unit searches for a matching file directory entry according to an identifier or a file name of the file to be read, and from the file directory entry, obtains a number of the start data block that stores data in the file body space;
I: The control unit obtains an FAT entry corresponding to the start data block according to the start data block number of the file and, from the FAT entry, obtains an FAT entry linked list of data blocks occupied by the file to be read. Then the control unit searches in the linked list for a data block number of the start address to be read according to the start data block number obtained from Step H and an offset of the start address to be read from the start address of the file body space, so as to read the data blocks until a designated length of the file content has been read.

Deleting the created or stored file comprises the steps of:
J: The control unit searches for a matching file directory entry according to an identifier or a file name of the file to be deleted, and from the file directory entry, obtains a number of the start data block that stores data in the file body space;
K: The control unit obtains an FAT entry corresponding to the start data block number obtained in Step J and, from the FAT entry, obtains an FAT entry linked list of data blocks occupied by the file to be deleted. Then the control unit deletes content of each of the data blocks according to the linked list until content of the last data block in the file has been deleted, and meanwhile, sets each FAT entry corresponding to the deleted data blocks to a value representing an unoccupied status;
L: The control unit deletes the data block occupied by the directory entry of the file to be deleted, and sets the corresponding FAT entry to a value representing an unoccupied status.

Altering a space occupied by the created or stored file comprises the steps of:
M: The control unit searches for a matching file directory entry according to an identifier or a file name of the file to be altered and, from the file directory entry, obtains a number of the start data block that stores data in the file body space;
N: The control unit searches for an FAT entry corresponding to the start data block according to the start data block number obtained in Step M, obtains an FAT entry linked list of data blocks occupied by the file to be altered, and then searches for an FAT entry corresponding to the last data block of the file according to the linked list;
O: The control unit sets the FAT entries according to size of the space to be occupied by the altered file;
P: The control unit alters a size value of the file space in the file directory entry of the file to be altered.

If the file space is to be reduced, the control unit still needs to determine a usage status of each data block corresponding to the FAT entries in Step N;

Step O also comprises the steps of:
O1 : According to the reduced size of the file space, the control unit sets FAT entries corresponding to one or more of the unoccupied data blocks in the file to a value representing an unoccupied status, and meanwhile, alters an FAT entry corresponding to the last data block in the file to a value representing an end.

On the other hand, if the file space is to be enlarged, then Step O comprises the steps of:
O1': The control unit searches for unoccupied FAT entries in the FAT, and allocates data blocks corresponding to the unoccupied FAT entries to the file according to a target size of the file. Then the control unit alters an FAT entry corresponding to the last data block occupied by the file to a value representing an end, and the FAT entries originally occupied by the file and the newly allocated FAT entries are linked together to form a new FAT entry linked list of the file.

This invention is advantageous in that:
(1) As the FAT entries are associated with the data blocks in one-to-one correspondence in the file system of this invention, we can locate and search for each data block occupied by each file in a definite way through the FAT entries;
(2) Blank data blocks in the file system of this invention are all managed by an FAT table, so instead of allocating a space for a file in the conventional sequential manner, a newly created file is allocated a space by searching in the FAT table for numbers of unoccupied data blocks and allocating unoccupied data blocks found to the newly created file. This enhances flexibility of file creation and allows to make full use of space fragments;
(3) When a file is deleted, the space originally occupied by the file can be fully recycled by simply releasing the corresponding FAT entries;
(4) In case one file is allocated an oversized space while another is allocated an undersized space, FAT entries corresponding to unoccupied data blocks in the oversized one can be released and allocated to the undersized one, and then respective file size information is altered in corresponding file directory entries. Thus, by having the files complement each other in size, the file sizes can be configured flexibly as needed.

### BRIEF DESCRIPTION OF THE SEVERAL VIEWS OF THE DRAWINGS

Fig. 1 is a schematic view of a file structure;
Fig. 2 is a schematic view illustrating a file allocation method in a conventional smart card;
Fig. 3 is a schematic view of a storage structure of a file A according to this invention;
Fig. 4 is a schematic view illustrating how a file space is re-allocated (prior to the re-allocation); and
Fig. 5 is a schematic view illustrating how a file space is re-allocated (after the re-allocation).

### DETAILED DESCRIPTION OF THE INVENTION

This invention provides a smart card storage system and file management method therein. The smart card storage system comprises a storage area and a control unit. The storage area comprises a file allocation table (FAT) storage area and a data storage area for storing file content, in which the FAT storage area comprises a plurality of FAT entries and the data storage area comprises a plurality of data blocks, each corresponding to an FAT entry. The control unit is configured to search in the FAT storage area for an FAT entry and control a file in a data block according to a correspondence relationship between the FAT entry and the data block.

In the system of this invention, the data storage area comprises a file directory entry storage unit for storing a file directory entry and a file body space storage unit for storing a file body space, in which the file directory entry storage unit and the file body space storage unit are located in different data blocks. The file directory entry storage unit is configured to store basic information of a file such as the name, size, type, access control right, start data block number and identifier of the file. The file body space storage unit is configured differently for directory files DF and elementary files. More specifically, for DF files which are a particular kind of files, the file body space storage unit is configured to store a set of all sub-files under the directory file; and for EF files, the file body space storage unit is configured to store actual content of the file. When allocating a storage space to a file, directory entries and file body space of the file are allocated different data blocks in the storage area. In the system of this invention, the content recorded in the FAT entry represents a number of a next data block occupied by the current file. If the current file does not have the next data block, the value in the FAT entry is a particular value representing an end; and if the data block is unoccupied, the value in the FAT entry is a particular value representing the unoccupied status.

In this system, the FAT entry storage area comprises a plurality of FAT entries, each corresponding to a data block; i.e., the number of FAT entries corresponds to that of the data blocks in the data storage area. FAT file systems are categorized into FAT12, FAT16 and FAT32 according to the bit number of respective FAT entries for recording data blocks: 12-bit, 16-bit or 32-bit. Taking FAT16 as an example, each data block occupies two bytes (16 bits) in the FAT.

The data storage area is divided into a plurality of data blocks equal in size for storing created files. The data blocks are numbered from 1 as Block 1, Block 2, Block 3, ... , and so on, which correspond to the FAT entry 1, FAT entry 2, FAT entry 3, ..., and so on in the FAT storage area. In other words, the FAT entries in the FAT storage area are associated with the data blocks in the data storage area in one-to-one correspondence.

Hereinbelow, file processing in the above smart card storage system according to an embodiment of this invention will be described with reference to an FAT 16 file system.

This invention provides a method of managing file creation in the above smart card storage system , in which creating a new file comprises the steps of:
A. The control unit searches in the FAT storage area for an unoccupied FAT entry, and finds an unoccupied data block according to a correspondence relationship between the FAT entry and the data block;
B. The control unit allocates the unoccupied data block found to a file directory entry of the file to be created, writes the file information, and alters a value of the FAT entry corresponding to the data block into a particular value representing an occupied status;
C. Repeating Step A to search for unoccupied data blocks, allocating the unoccupied data blocks found this time to a file body space of the file to be created, altering FAT entries corresponding to the data blocks into particular values that represent an occupied status so as to from an FAT entry linked list, recording a number of the first data block into the file directory entry determined in Step B, and altering an FAT entry corresponding to the last data block occupied by the file into a value representing an end.

If the file is not to be stored in a blank smart card, then the control unit also determines a remaining space under the current directory prior to Step A, and Step A may be executed only if the remaining space under the current directory is no smaller than the space necessary for creation of the file.

During creation of a file, the processing differs depending on the type of the file:

If the file to be created is a directory file, the file body space of the directory file is comprised of a set of all sub-files thereof. Hence, allocation of the file body space thereof is accomplished by Step B and Step C when the sub-files are created under the directory file, and it is unnecessary to execute Step C solely for purpose of creating the directory file. In other words, Step C is executed only when a sub-file comprises a directory file therein. The process of creating a directory file is as follows: as the directory file allows sub-files to be created thereunder, the file body space thereof comprises a set of sub-files created thereunder. Therefore, during the creation, what needed is only to search for an empty data block space and allocate it to the directory entries of the directory file, and the file body space thereof cannot be allocated until the sub-files are created. That is, the process of creating sub-files under the directory file is just the same process of allocating data blocks to the file body space of the directory file. To create sub-files under the directory file, a remaining space under the directory file has to be calculated at first: size of the remaining space under the DF file = size of the DF file body space - size of sub-file spaces in total under the DF file. If the remaining space calculated has a size smaller than that of the file to be created (size of file directory entries + size of the file body space), then there lacks an enough space for creating the file, in which case the system returns a reply indicating creation failure to the application terminal. Otherwise, if the remaining space is large enough, the file is allowed to be created.

On the other hand, if the file to be created is an elementary file, then the control unit also counts the number of data blocks in the file space of the elementary file prior to Step C. Further in Step C, the control unit needs to find a corresponding number of unoccupied FAT entries from the FAT, link them together, then allocate these data blocks to the file body space of the elementary file, and alter an FAT entry corresponding to the last data block occupied by the file into a value representing an end.

For the directory file, the file body space thereof is comprised of all sub-files thereunder. Hence, when the FAT entries are linked, the start data block number in a file directory entry of the directory fife records a number of a data block occupied by a file directory entry of the first sub-file created under the directory file, an FAT entry corresponding to the data block occupied by the file directory entry of the first sub-file records a number of a data block occupied by a file directory entry of the second sub-file created under the directory file, an FAT entry corresponding to the data block occupied by the file directory entry of the second sub-file records a number of a data block occupied by a file directory entry of the third sub-file created under the directory file, and so on. Thus, an FAT entry linked list of the directory file is formed.

For the elementary file, the file body space thereof is comprised of actual content thereof. Hence, the start data block number in a file directory entry of the elementary file records a number of the first data block occupied by a file body space of the elementary file, the FAT entry corresponding to the start data block records a number of the second data block occupied by the file body space of the elementary file, and so on. Thus, an FAT entry linked list of the elementary file is formed.

Subsequent to creation of the file, storing the file content comprises the steps of:
D: The control unit obtains the number of the start data block that stores data in the file body space according to the directory entry of the created file;
E: The control unit obtains a corresponding FAT entry according to the start data block number of the file and further obtains the FAT entry linked list of the data blocks to be occupied by the file to be stored. Then the control unit begins to store the file content according to the FAT entry linked list until the file content is completely stored.

As all data blocks are managed collectively by the FAT in the file system of this invention, discontinuous storage of a file is permitted while the file can still be accessed normally as long as the FAT entries record a linked list of data blocks occupied by the file.

In a preferred embodiment of storing a file according to this embodiment, an FAT entry value of 0 is defined to represent an unoccupied status of the corresponding data block, and an FAT entry value of FFFF is defined to represent that there does not exist a next data block in the linked list. Each FAT entry value between FFFF represents a number of the respective next data block of the current file. The control unit allocates different data blocks to the directory entry and file body space of the file to be stored. For a data block occupied by the file directory entry, the corresponding FAT entry thereof records a number of a data block where a directory entry of a brother file thereof is located; and if there exists no brother file, the FAT entry is given a value representing an end, e.g., FFFF. For the file body space, the corresponding FAT entry of each data block records a number of the respective next data block allocated to the file; and if there does not exist a next data block, the FAT entry is given a value representing an end.

The storing method of this invention may not only keep the flexibility in FAT file management, but also increase the accessing speed during read/write operations.

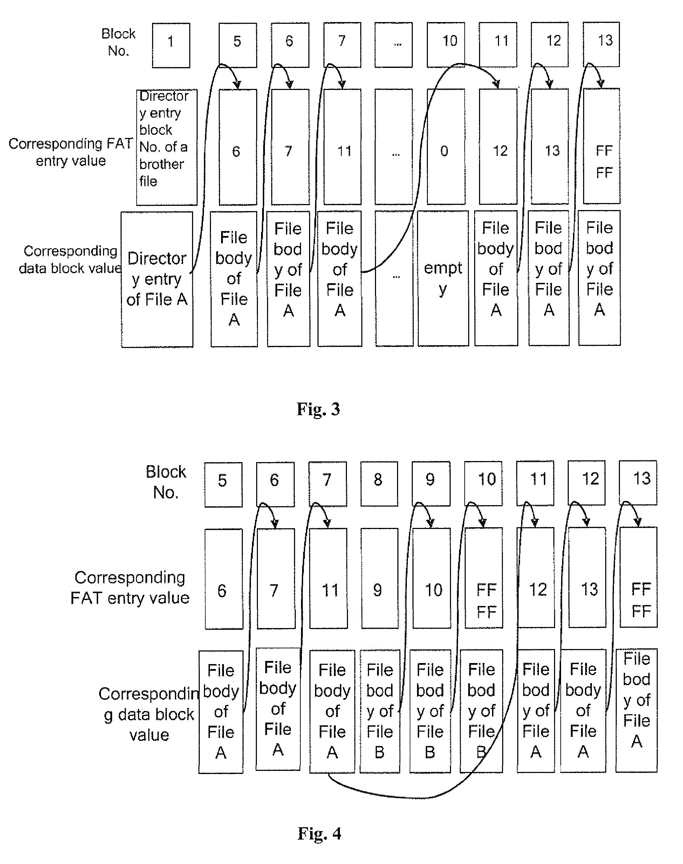

Hereinbelow, a file A will be taken as an example to describe a storing process in detail with reference to Fig. 3.

The file A is an elementary file. To store this file, the following steps are executed:
(1) Determining whether a remaining space under the current directory is enough. If it is not enough, creation of a new sub-file is not allowed.
(2) Searching in the FAT for an unoccupied data block and allocating the data block found to the directory entry of the file to be stored. In Fig. 4, the data block 1 is allocated to the directory entry of the file A.
(3) Counting the number of data blocks needed in the file body space of the elementary file, searching in the FAT a corresponding number of unoccupied FAT entries and linking them together; i.e., set a value of an FAT entry to represent a number of a data block corresponding to the next FAT entry of the file. For example, in FIG. 4, six data blocks are allocated to the file body space of the file A. Then the control unit finds FAT entries No. 5, 6, 7, 11, 12, 13 as unoccupied FAT entries and allocates them to the file body space of the file A. Meanwhile, the FAT entry No. 5 is set to a value of 6, the FAT entry No. 6 is set to a value of 7, the FAT entry No. 7 is set to a value of 11, and so on. The FAT entry No. 13, as the last data block in the file A, is set to a value of FFFF, which means that there does not exist a next FAT entry in this file. Then the file content is stored into these data blocks to complete the storing process.

It follows from the above description that, it is unnecessary to allocate a continuous series of data blocks to a file in the system of this invention, and the file can be searched, read and written in a complete form as long as the FAT entries record the data block link of the file when the data blocks are allocated.

Hereinbelow, a method of updating a created or stored file according to this invention will be described, which comprises the steps of:
F: The control unit searches for a matching file directory entry according to an identifier or a file name of the file to be updated, and from the file directory entry, obtains a number of the start data block that stores data in the file body space;
G: The control unit obtains an FAT entry corresponding to the start data block according to the start data block number and further obtains an FAT entry linked list of data blocks occupied by the file to be updated, and then searches in the linked list for a new start data block number according to the start data block number obtained in Step F and an offset of an updated start address from the start address of the file space, so as to update the data blocks until a designated length of the file content has been updated.

Also, this updating process is explained with reference to Fig. 3 as follows. The control unit firstly calculates in which data block the updated start address lies according to the target offset (i.e., the offset of the position to be updated or read in the file from the start position of the file) and a length of the data blocks. Here, for purpose of illustration, the first data block will be taken as an example of a start address to be updated. The control unit searches for a directory entry of the file A, and, according to the start data block number recorded in the directory entry of the file A, searches for the first data block in the file A, i.e., the data block No. 5. Then the control unit updates the file content in the data block Neo. 5. As the FAT entry of the data block No. 5 has a value of 6, it can be known that the next data block in the file A is the data block No. 6; then as the FAT entry of the data block No. 6 has a value of 7, it can be known that the next data block in the file A is the data block No. 7; in turn, as the FAT entry of the data block No. 7 has a value of 11, it can be known that the next data block in the file A is the data block No. 11; and so on. In this way, file content in these data blocks are updated until a designated length of file content is updated completely.

Now, a method of reading a file in the aforesaid system will be described, which comprises the steps of:
H: The control unit searches for a matching file directory entry according to an identifier or a file name of the file to be read, and from the file directory entry, obtains a number of the start data block that stores data in the file body space;
I: The control unit obtains an FAT entry corresponding to the start data block according to the start data block number of the file and, from the FAT entry, obtains an FAT entry linked list of data blocks occupied by the file to be read. Then the control unit searches in the linked list for a data block number of the start address to be read according to the start data block number obtained in Step H and an offset of the start address to be read from the start address of the file space, so as to read the data blocks until a designated length of the file content has been read.

Also, the file A will be taken as an example to illustrate the reading process with reference to Fig. 3. The control unit firstly searches for a directory entry of the file A and, according to the start data block number recorded in the directory entry of the file A, searches for the first data block in the file A, i.e., the data block No. 5. Then the control unit reads the content in the data block No. 5. As the FAT entry of the data block No. 5 has a value of 6, it can be known that the next data block in the file A is the data block Neo. 6; then as the FAT entry of the data block Neo, 6 has a value of 7, it can be known that the next data block in the file A is the data block No. 7; in turn, as the FAT entry of the data block No. 7 has a value of 11, it can be known that the next data block in the file A is the data block No. 11; and so on. In this way, file content in these data blocks are read. Finally, as the FAT entry of the data block No. 13 has a value of FFFF, it can be known that the file A ends here because there does not exist a next data block. Thus, the file A can be read completely.

This invention also provides a method of deleting a file in the aforesaid system for a smart card, which comprises the steps of:
J: The control unit searches for a matching file directory entry according to an identifier or a file name of the file to be deleted, and from the file directory entry, obtains a number of the start data block that stores data in the file body space;
K: The control unit obtains an FAT entry corresponding to the start data block number obtained in Step J and, from the FAT entry, obtains an FAT entry linked list of data blocks occupied by the file to be deleted. Then the control unit deletes content of each of the data blocks according to the linked list until content of the last data block in the file has been deleted, and meanwhile, sets each FAT entry corresponding to the deleted data blocks to a value representing an unoccupied status;
L: The control unit deletes the data block occupied by the directory entry of the file to be deleted, and sets the corresponding FAT entry to a value representing an unoccupied status.

Also, the deleting process will be described with reference to Fig. 3 as follows. The control unit firstly searches for a directory entry of the file A and, according to the start data block number recorded in the directory entry of the file A, searches for the first data block in the file A, i.e., the data block No. 5. Then the control unit deletes the content in the data block No. 5. As the FAT entry of the data block No. 5 has a value of 6, it can be known that the next data block in the file A is the data block No. 6; then as the FAT entry of the data block No. 6 has a value of 7, it can be known that the next data block in the file A is the data block No. 7; in turn, as the FAT entry of the data block No. 7 has a value of 11, it can be known that the next data block in the file A is the data block No. 11; and so on. In this way, file content in these data blocks are deleted in sequence. Meanwhile, the FAT entry of each deleted data block must be set to a value of 0 to represent an unoccupied status of the data block, so that the system can allocate this data block to other files to be created. This deleting process proceeds until the last data block in this file is deleted. After the file body space is deleted, the data block occupied by the file directory entry has also to be deleted and the FAT thereof is altered into a value of 0, thus concluding the deleting process of the file A.

This invention also provides a method of altering a space occupied by a file in the aforesaid system for a smart card, which comprises the steps of:
M: The control unit searches for a matching file directory entry according to an identifier or a file name of the file to be altered and, from the file directory entry, obtains a number of the start data block that stores data in the file body space;
N: The control unit searches for an FAT entry corresponding to the start data block according to the start data block number obtained in Step M, obtains an FAT entry linked list of data blocks occupied by the file to be altered, and then searches for an FAT entry corresponding to the last data block of the file according to the linked list;
O: The control unit sets the FAT entries according to size of the space to be occupied by the altered file;
P: The control unit alters a size value of the file space in the file directory entry of the file to be altered.

If the file space is to be reduced, the control unit still needs to determine a usage status of each data block corresponding to the FAT entries in Step N;

Step O also comprises the steps of:
O1: According to the reduced size of the file space, the control unit sets FAT entries corresponding to one or more of the unoccupied data blocks in the file to a value representing an unoccupied status, and meanwhile, alters an FAT entry corresponding to the last data block in the file to a value representing an end.

On the other hand, if the file space is to be enlarged, then Step O comprises the steps of:
O1': The control unit searches for unoccupied FAT entries in the FAT, and allocates data blocks corresponding to the unoccupied FAT entries to the file according to a target size of the file. Then the control unit alters an FAT entry corresponding to the last data block occupied by the file to a value representing an end, and the FAT entries originally occupied by the file and the newly allocated FAT entries are linked together to form a new FAT entry linked list of the file.

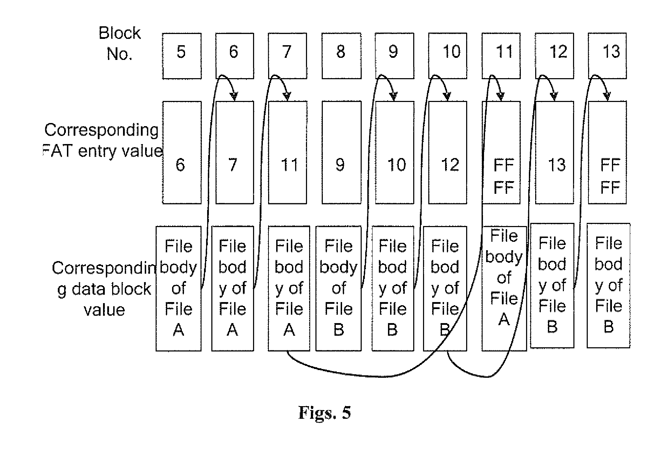

This will be explained now with reference to Figs. 4 and 5.

Fig. 4 is a schematic view of a file space prior to the re-allocation. It can be seen from Fig. 4 that, the file A occupies six data blocks, namely, No. 5, No.6, No.7, No. 11, No.12, and No. 13; and a file B occupies three data blocks, namely, No.8, No.9 and No. 10. It is presumed that the file A uses only the first four data blocks at present, with the blocks Neo. 12 and 13 shown in hatches being left unused.

Then, if the user wants to reduce the space of the file A but enlarge the space of the file B, the unused space (i.e., the blocks Neo. 12 and 13) in the file A can be transferred to the file B. That is, the file A now occupies the four data blocks No.5, No.6, No.7 and Neo.11, while the file B now occupies the rive data blocks No.8, No.9, No.10, Neo.12 and No. 13.

To this end, the FAT entry corresponding to the originally last data block (i.e., the block No.10) in the file B should be altered to a value of 12 so that it will be directed to the newly allocated data block No. 12; meanwhile, the FAT entry corresponding to the last data block (i.e., the block No. 11) in the file A should be altered to a value of FFFF to indicate that no subsequent data blocks exist. The altered spaces of the files A and the file B are shown schematically in Fig. 5.

With the FAT entries having been altered, the file sizes in directory entries of the file A and the file B also have to be altered accordingly to indicate sizes of the altered files.

The method of altering a file space of this invention is capable of re-allocating size of the file. That is, in case one file is allocated a wasteful oversized space while another is allocated an undersized space, an unused space in the oversized one can be transferred for use by the undersized one. This allows the user to utilize the storage space in a flexible way.

It follows from the above description that, the smart card file system of this invention and the management method thereof can overcome disadvantages of the prior art solutions and allow for flexible creation, deletion and space recycling of files.

Obviously, various modifications and variations of this invention may occur to those skilled in the art without departing from spirit and scope of this invention. Therefore, this invention is intended to encompass all such modifications and variations that still fall within claims or equivalent technical scope of this invention.

## Claims

1. A smart card storage system , comprising a storage area and a control unit, being **characterized in that**: the storage area comprises a file allocation table (FAT) storage area and a data storage area for storing file content, in which the FAT storage area comprises a plurality of FAT entries and the data storage area comprises a plurality of data blocks, each corresponding to an FAT entry, wherein the control unit is configured to search in the FAT storage area for an FAT entry and control a file in a data block according to a correspondence relationship between the FAT entry and the data block.

2. The smart card storage system of Claim 1, being **characterized in that**: the data storage area comprises a file directory entry storage unit for storing a file directory entry and a file body space storage unit for storing a file body space, and the file directory entry storage unit and the file body space storage unit are located in different data blocks.

3. The smart card storage system of Claim 1, being **characterized in that**:
content recorded in the FAT entry represents a number of a next data block occupied by the current file, and if the current file does not have the next data block, the value in the FAT entry is a particular value representing an end; and
if the data block is unoccupied, the value in the FAT entry is a particular value representing an unoccupied status.

4. A method of managing file creation in the smart card storage system of Claim 1, being **characterized in that** creating a new file comprises the steps of:
A. the control unit searches in the FAT storage area for an unoccupied FAT entry, and finds an unoccupied data block according to a correspondence relationship between the FAT entry and the data block;
B. the control unit allocates the unoccupied data block found to a file directory entry of the file to be created, writes the file information, and alters a value of the FAT entry corresponding to the data block into a particular value representing an occupied status; and
C. repeating Step A to search for unoccupied data blocks, allocating the unoccupied data blocks found this time to a file body space of the file to be created, altering FAT entries corresponding to the data blocks into particular values representing an occupied status so as to from an FAT entry linked list, recording a number of the first data block into the file directory entry determined in Step B, and altering an FAT entry corresponding to the last data block occupied by the file into a value representing an end.

5. The method of Claim 4, being **characterized in that**: the file information, written in Step B includes at least the file size and a start data block number.

6. The method of Claim 4, being **characterized in that**: prior to Step A, the control unit also determines a remaining space under the current directory, and Step A may be executed only if the remaining space under the current directory is no smaller than a space necessary for creation of the file.

7. The method of Claim 4 or Claim 5 or Claim 6, being **characterized in that**: if the file to be created is a directory file, then in Step C, the start data block number in the file directory entry records a number of a data block occupied by a file directory entry of a first sub-file to be created under the directory file, and the FAT entry corresponding to the data block occupied by the file directory entry of the first sub-file records a number of a data block occupied by a file directory entry of the next sub-file to be created under the directory file, and so on, and thus all the data blocks are linked together to form the FAT entry linked list of the file body space of the directory file.

8. The method of Claim 4 or Claim 5 or Claim 6, being **characterized in that**: if the file to be created is an elementary file, then in Step C, the start data block number in the file directory entry records a number of a first data block occupied by a file body space of the elementary file, and the FAT entry corresponding to the start data block records a number of a second data block occupied by the file body space of the elementary file.

9. The method of Claim 8, being **characterized in that**: prior to Step C, the control unit also counts the number of the data blocks in the file body space of the elementary file, and in Step C, the control unit needs to find a corresponding number of unoccupied FAT entries from the FAT and link them together before allocating these data blocks to the file body space of the elementary file.

10. The method of Claim 4, being **characterized in that**: storing content of the file comprises the steps of:
D: the control unit obtains the number of the start data block that stores data in the file body space according to the directory entry of the created file; and
E: the control unit obtains a corresponding FAT entry according to the start data block number of the file and further obtains the FAT entry linked list of the data blocks occupied by the file to be stored, and then the control unit begins to store the file content according to the FAT entry linked list until the file content is completely stored.

11. The method of Claim 4 or Claim 10, being **characterized in that** updating the created or stored file comprises the steps of:
F: the control unit searches for a matching file directory entry according to an identifier or a file name of the file to be updated, and from the file directory entry, obtains the number of the start data block that stores data in the file body space; wand
G: the control unit obtains an FAT entry corresponding to the start data block according to the start data block number and further obtains an FAT entry linked list of data blocks occupied by the file to be updated, and then searches in the linked list for a new start data block number according to the start data block number obtained in Step F and an offset of a target start address from a start address of the file body space, so as to update the data blocks until a designated length of the file content has been updated.

12. The method of Claim 4 or Claim 10, being **characterized in that**: reading the created or stored file comprises the steps of:
H: the control unit searches for a matching file directory entry according to an identifier or a file name of the file to be read, and from the file directory entry, obtains the number of the start data block that stores data in the file body space;
I: the control unit obtains an FAT entry corresponding to the start data block according to the start data block number of the file and, from the FAT entry, obtains an FAT entry linked list of data blocks occupied by the file to be read, then the control unit searches in the linked list for a data block number of a start address to be read according to the start data block number obtained from Step H and an offset of the start address to be read from the start address of the file body space, so as to read the data blocks until a designated length of the file content has been read.

13. The method of Claim 4 or Claim 10, being **characterized in that** deleting the created or stored file comprises the steps of:
J: the control unit searches for a matching file directory entry according to an identifier or a file name of the file to be deleted, and from the file directory entry, obtains the number of the start data block that stores data in the file body space;
K: the control unit obtains an FAT entry corresponding to the start data block number obtained in Step J and, from the FAT entry, obtains an FAT entry linked list of data blocks occupied by the file to be deleted, and then the control unit deletes content of each of the data blocks according to the linked list until content of the last data block in the file has been deleted, and meanwhile, sets each of the FAT entries corresponding to the deleted data blocks to a value representing an unoccupied status; and
L: the control unit deletes the data block occupied by the directory entry of the file to be deleted, and sets the corresponding FAT entry to a value representing an unoccupied status.

14. The method of Claim 4 or Claim 10, being **characterized in that** altering a space occupied by the created or stored file comprises the steps of:
M: the control unit searches for a matching file directory entry according to an identifier or a file name of the file to be altered and, from the file directory entry, obtains the number of the start data block that stores data in the file body space;
N: the control unit searches for an FAT entry corresponding to the start data block according to the start data block number obtained in Step M, obtains an FAT entry linked list of data blocks occupied by the file to be altered, and then searches for an FAT entry corresponding to the last data block of the file according to the linked list;
O: the control unit sets the FAT entries according to size of the space to be occupied by the altered file; and
P: the control unit alters a size value of the file space in the file directory entry of the file to be altered.

15. The method of Claim 14, being **characterized in that**: if the file space is to be reduced, the control unit still needs to determine a usage status of each of the data blocks corresponding to the FAT entries in Step N;
Step O also comprises the steps of:
O1: according to the reduced size of the file space, the control unit sets FAT entries corresponding to one or more of the unoccupied data blocks in the file to a value representing an unoccupied status, and meanwhile, alters an FAT entry corresponding to the last data block in the file to a value representing an end.

16. The method of Claim 14, being **characterized in that**: if the file space is to be enlarged, then Step O comprises the steps of:
O1': the control unit searches for unoccupied FAT entries in the FAT, and allocates data blocks corresponding to the unoccupied FAT entries to the file according to a target size of the file, and then the control unit alters an FAT entry corresponding to the last data block occupied by the file to a value representing an end, and FAT entries originally occupied by the file and the newly allocated FAT entries are linked together to form a new FAT entry linked list of the file.
